# EUROPÄISCHE PATENTSCHRIFT

(11) **EP 0 607 161 B1**
(45) Veröffentlichungstag und Bekanntmachung des Hinweises auf die Patenterteilung: **23.04.1997**
(21) Anmeldenummer: 92917818.4
(22) Anmeldetag: 14.08.1992
(51) Int. Cl.: B60T 8/48

(54) **BREMSDRUCKREGELVORRICHTUNG FÜR EINE HYDRAULISCHE KRAFTFAHRZEUGBREMSANLAGE**
BRAKING PRESSURE REGULATOR FOR A MOTOR VEHICLE HYDRAULIC BRAKING SYSTEM
DISPOSITIF REGULATEUR DE LA PRESSION DE FREINAGE POUR UN SYSTEME HYDRAULIQUE DE FREINAGE DE VEHICULE A MOTEUR

(30) Priorität: 16.10.1991 DE 4134214
(43) Veröffentlichungstag der Anmeldung: 27.07.1994
(73) Patentinhaber: ITT Automotive Europe GmbH, 60488 Frankfurt am Main (DE)
(72) Erfinder: BECK, Erhard, D-6290 Weilburg (DE); DINKEL, Dieter, D-6239 Eppstein (DE); HAUPT, Karlheinz, D-6535 Gau-Algesheim (DE)
(86) Internationale Anmeldenummer: EP9201863
(87) Internationale Veröffentlichungsnummer: WO9308053

(56) Entgegenhaltungen:
- WO-A-92/05990
- DE-C- 3 439 408
- DE-C- 3 900 851
- GB-A- 2 194 010

## Beschreibung

Die Erfindung betrifft eine Bremsdruckregelvorrichtung für eine hydraulische Kraftfahrzeugbremsanlage mit einem Hauptbremszylinder, mindestens einem mit dem Hauptbremszylinder über eine Bremsleitung verbundenen Radbremszylinder zum Betätigen einer Bremse, einem Bremsdrucksteuerkreis, der zwischen dem Hauptbremszylinder und dem Radbremszylinder in die Bremsleitung geschaltet ist und eine Pumpe und Steuerventile enthält, die durch eine Regeleinrichtung steuerbar sind und den Radbremszylinder mit der Bremsleitung oder einer zum Einlaß der Pumpe führenden Rücklaufleitung verbinden, und mit einer zwischen dem Hauptbremszylinder und dem Bremsdrucksteuerkreis in die Bremsleitung geschalteten Ventileinrichtung, die in einer ersten Betriebsart den Auslaß der Pumpe über die Bremsleitung mit dem Hauptbremszylinder verbindet und in eine zweiten Betriebsart die Verbindung vom Auslaß der Pumpe zum Hauptbremszylinder unterbricht und den Einlaß der Pumpe mit dem Hauptbremszylinder oder einem Behälter verbindet und weiteren Merkmalen des Oberbegriffs des Anspruch 1.

Um die Grundzüge des Problems zu erläutern sei zunächst auf eine Bremsdruckregelvorrichtung verwiesen, die aus der DE-OS 38 31 426 bekannt ist. Sie eignet sich zur automatischen Regelung des an den Radbremszylindern wirksamen Bremsdrucks in Abhängigkeit von der durch eine Überwachungseinrichtung beobachteten Drehbewegung eines oder mehrerer Räder eines Kraftfahrzeugs, um das Blockieren der Räder bei einem Bremsvorgang durch Regelung des Bremsschlupfes oder ein Durchdrehen der angetriebenen Räder beim Anfahren durch Regelung des Antriebsschlupfes zu vermeiden. Zur Regelung des Bremsschlupfes ist die erste Betriebsart, zur Regelung des Antriebsschlupfes ist die zweite Betriebsart vorgesehen. Bei der bekannten Bremsdruckregelvorrichtung ist der Radbremszylinder in der ersten Betriebsart in der Druckreduzierstufe zur Absenkung des Bremsdrucks nur mit einem Niederdruckspeicher und dem Einlaß der Pumpe verbunden. Ist der Niederdruckspeicher leer, so besteht die Gefahr, daß durch die Saugkraft der Pumpe der Druck im Radbremszylinder soweit abgesenkt wird, daß es zu einem Zurückziehen des Bremskolbens und zu einem Eindringen von Luft kommen kann. Dies kann den Bremsvorgang und die Bremsdruckregelung beeinträchtigen.

Aus der DE 34 39 408 C1 ist eine ebensolche Anlage schon bekannt, bei der das oben erwähnte Problem dadurch gelöst ist, daß an der Pumpensaugseite zwei parallelgeschaltete Saugventile vorgesehen sind, die einen unterschiedlichen Öffnungsdruck aufweisen. Das eine Saugventil verbindet den Eingang der Pumpe mit dem Niederdruckspeicher und weist einen Öffnungsdruck zwischen 1 und 3 bar auf, während das andere Rückschlagventil, mit dem der Eingang der Pumpe mit dem Vorratsbehälter vebindbar ist, ein Öffnungsdruck zwischen 0,2 und 0,8 bar aufweist.

Nach der daher vorgeschlagenen Ausführungsform sind zwei Rückschlagventile, d.h. zwei Ventilsitze und zwei Ventilkörper einzusetzen. Dies erfordert einen erhöhten Bauaufwand. Der Erfindung liegt somit die Aufgabe zugrunde, eine Bremsdruckregelvorrichtung der eingangs genannten Art zu verbessern, so daß es mit einfachen Mitteln erreicht wird, daß es im Betrieb an einem Radbremszylinder nicht zu einer Überschreitung des Atmosphärendruckes kommen kann.

Erfindungsgemäß wird die Aufgabe dadurch geklärt, daß die Ventilkugel des Druckhalteventils über zwei hintereinander geschaltete Druckfedern an einem Kolben abgestützt ist, wobei zwischen den Druckfedern ein Federteller vorgesehen ist, der an einer mit dem Kolben verbundenen Anschlaghülse abgestützt ist, so daß die im Vergleich zur Druckfeder stärkere Druckfeder unter Vorspannung steht.

Durch die erfindungsgemäße Ausgestaltung der Bremsdruckregelvorrichtung wird ereicht, daß in der ersten Betriebsart, in der während der Druckreduzierstufe der Radbremszylinder vom Hauptbremszylinder getrennt ist, der Bremsdruck an dem Radbremszylinder nicht unter den über dem Atmosphärendruck liegenden Öffnungsdruck des Druckhalteventils absinken kann. Selbst bei vollständiger Druckabsenkung durch entsprechende Steuerbefehle der Regeleinrichtung bleibt ein Restdruck von über 1 bar in der Rücklaufleitung erhalten, so daß ein Eindringen von Luft oder ein Zurücksaugen des Bremskolbens wirksam vermieden ist. In der zweiten Betriebsphase, in der ohne eine Betätigung des Hauptbremszylinders die Radbremsen der Antriebsräder des Fahrzeugs, durch die Regeleinrichtung gesteuert, automatisch betätigt werden, wobei der erforderliche Bremsdruck von der Pumpe erzeugt wird, verhindert der höhere Öffnungsdruck des Druckhalteventils das selbsstätige Ansaugen von Druckmitteln aus dem Hauptbremszylinder durch die Pumpe. Erfindungsgemäß sind daher in der zweiten Betriebsart wirksame Mittel vorgesehen, durch die das selbsstätige Ansaugen von Druckmitteln durch die Pumpe ermöglicht wird. Ein derartiges Mittel besteht gemäß der Erfindung darin, daß der Öffnungsdruck des Druckhalteventils in der zweiten Betriebsart der Bremsdruckregelvorrichtung herabgesetzt wird. Dies wird auf einfache Weise dadurch erreicht, daß das Druckhalteventil ein federbelastetes Verschlußelement aufweist, das mit einer der zweiten Betriebsart entsprechenden, geringen Federkraft beaufschlagt ist und das mit Hilfe eines in der ersten Betriebsart mit einem Steuerdruck, insbesondere dem Druck des Hauptbremszylinders beaufschlagbaren Kolbens mit einer den Öffnungsdruck erhöhenden Federkraft beaufschlagbar ist. Das Druckhalteventil wird somit je nach Betriebsart auf den geeigneten Öffnungsdruck umgeschaltet.

Bildet das Druckhalteventil das Saugventil der Pumpe, so sieht eine vorteilhafte Ausgestaltung der Erfindung vor, daß der Kolben aus einer zylindrischen Hülse besteht, die im Druckraum der Pumpe zwischen dem Pumpenkolben und dem Saugventil angeordnet ist und deren Enden mit gleichem Durchmesser gegenüber dem Druckraum abgedichtet sind, wobei der in seinem Durchmesser größere Mittelabschnitt der Hülse einen Ringraum begrenzt, der mit dem Steuerdruck beaufschlagbar ist. Zur Erhöhung der Schließkraft kann hierbei entweder eine zusätzliche Feder vorgesehen sein, die durch Verschieben des Kolbens mit dem Verschlußelement in Eingriff kommt, oder es kann die Vorspannung einer einzigen Feder durch Verschieben des Kolbens erhöht werden. Der Kolben kann ferner im Saugraum angeordnet sein, wobei zur Herabsetzung des Öffnungsdrucks zusätzlich eine in Öffnungsrichtung wirkende Feder durch Betätigung des Kolbens in ihrer Wirkung verändert werden kann.

Eine andere Ausgestaltung der Erfindung läßt den Öffnungsdruck des Druckhalteventils unverändert und sieht stattdessen vor, daß vor dem Druckhalteventil eine hydrodynamische Ladepumpe angeordnet ist, die durch Ansteuerung in der zweiten Betriebsart einen den Öffnungsdruck des Druckhalteventils übersteigenden Druck in der Rücklaufleitung erzeugt. Bei dieser Ausgestaltung kann das Druckhalteventil ebenfalls durch das Saugventil der Pumpe gebildet werden, wobei es lediglich erforderlich ist, die Kraft der auf das Verschlußelement einwirkenden Ventilfeder zu erhöhen. Weil der Öffnungsdruck des Druckhalteventils vergleichsweise niedrig ist, kann eine im Aufbau sehr einfache hydrodynamische Pumpe vorgesehen werden, die gerade in der Lage ist den Öffnungsdruck des Druckhalteventils zu überwinden und als Ladepumpe die zur Bremsdruckerzeugung vorgesehene Kolbenpumpe mit Druckmittel zu speisen. Die hydrodynamische Ladepumpe kann erfindungsgemäß parallel zur Pumpe an die Rücklaufleitung angeschlossen und gemeinsam mit der Pumpe antreibbar sein, wobei der Einlaß der hydrodynamischen Ladepumpe mit dem Hauptbremszylinder oder dem Behälter verbunden und in der ersten Betriebsart durch ein druckabhängig schließendes Ventil sperrbar ist. Diese Ausgestaltung hat den Vorteil, daß die Ladepumpe keinen separaten Antriebsmotor benötigt und daß sie in die Pumpe integriert werden kann. Da die Ladepumpe bei dieser Ausgestaltung auch in der ersten Betriebsart der Bremsdruckregelvorrichtung angetrieben wird, wird der Pumpeneingang in der ersten Betriebsart durch ein Ventil gesperrt, um die Ladewirkung zu unterbinden. Das Ventil kann elektromagnetisch oder hydraulisch betätigbar sein. Besonders zweckmäßig ist eine Ausgestaltung bei der das Ventil durch den Druck des Hauptbremszylinders in seine Sperrstellung geschaltet wird, da durch eine Betätigung des Hauptbremszylinders in jedem Fall die erste Betriebsart herbeigeführt wird.

Bei einer Bremsdruckregelvorrichtung für eine Zweikreisbremsanlage mit zwei voneinander getrennten Bremskreisen, die jeweils eine Pumpe und ein Druckhalteventil aufweisen, kann zur Verminderung des Bauaufwands vorgesehen sein, daß die Saugleitungen beider Bremskreise gemeinsam an den Auslaß der hydrodynamischen Ladepumpe angeschlossen sind, wobei die Saugleitungen der beiden Bremskreise durch federbelastete Rückschlagventile voneinander getrennt sind. Die aus Sicherheitsgründen erforderliche Unabhängigkeit der beiden Bremskreise bleibt daher trotz des Vorhandenseins einer gemeinsamen Ladepumpe erhalten.

Ein anderes Mittel, um in der zweiten Betriebsart das selbsttätige Ansaugen der Pumpe zu ermöglichen, kann nach einem weiteren Vorschlag der Erfindung darin bestehen, daß das Druckhalteventil stromauf vom Saugventil der Pumpe in der Saugleitung angeordnet ist und daß zwischen dem Saugventil und dem Druckhalteventil von der Saugleitung eine Verbindungsleitung abzweigt, die zum Hauptbremszylinder oder einem Behälter führt und ein Sperrventil enthält, das in der ersten Betriebsart offen und in der zweiten Betriebsart geschlossen ist. Bei dieser Ausgestaltung kann das Druckhalteventil nicht das Saugventil der Pumpe ersetzen, dafür vermindert sich aber der zusätzliche Bauaufwand für Maßnahmen, die die Wirkung des Druckhalteventils in der zweiten Betriebsphase ausschalten.

Die Erfindung wird nachfolgend anhand von Ausführungsbeispielen näher erläutert, die in der Zeichnung dargestellt sind. Es zeigen
- Figur 1: eine schematische Darstellung eines Bremskreises einer Kraftfahrzeugbremsanlage mit einer erfindungsgemäßen Bremsdruckregelvorrichtung mit einem Druckhalteventil mit umschaltbarem Öffnungsdruck,
- Figur 2: eine schematische Darstellung einer hinsichtlich der in die Bremsleitung geschalteten Ventileinrichtung abgewandelten Ausführungsform der Bremsanlage gemäß Figur 1,
- Figur 3: eine schematische Darstellung einer Ausführungsform eines Bremskreises einer Kraftfahrzeugbremsanlage mit einer erfindungsgemäßen Bremsdruckregelvorrichtung und einem vor dem Saugventil der Pumpe angeordneten Druckhalteventil und
- Figur 4: eine schematische Darstellung beider Bremskreise einer Kraftfahrzeugbremsanlage mit erfindungsgemäßer Bremsdruckregelvorrichtung und einer dem Druckhalteventil zugeordneten Ladepumpe.

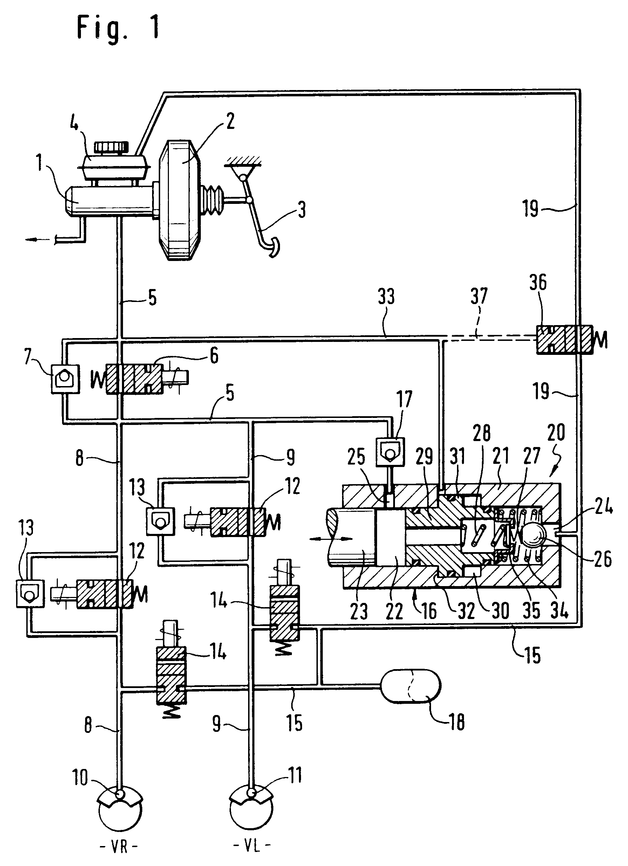

Den in den Figuren 1 bis 4 dargestellten hydraulischen Kraftfahrzeugbremsanlagen sind gemeinsam ein Hauptbremszylinder 1 mit einem Unterdruckbremskraftverstärker 2, der durch ein Bremspedal 3 zu betätigen ist. An dem Hauptbremszylinder 1 ist ein Behälter 4 angeordnet, der einen Druckmittelvorrat enthält und in der Bremslösestellung an die Arbeitskammern des Hauptbremszylinders 1 angeschlossen ist.

Die dargestellten Bremskreise weisen jeweils eine an eine Arbeitskammer des Hauptbremszylinders 1 angeschlossene Bremsleitung 5 mit einer elektromagnetisch betätigbaren Ventileinrichtung 6 auf, die in ihrer Ruhestellung einen offenen Durchgang für die Bremsleitung 5 bildet und durch Erregung ihres Betätigungsmagneten in eine Sperrstellung geschaltet wird, in der die Bremsleitung 5 einseitig zur Arbeitskammer des Hauptbremszylinders hin gesperrt ist. In der entgegengesetzten Strömungsrichtung bleibt die Bremsleitung 5 durch ein zur Ventileinrichtung parallel geschaltetes Rückschlagventil 7 offen. An die Bremsleitung 5 sind Zweigleitungen 8, 9 angeschlossen, die jeweils zu einem Radbremszylinder 10 bzw. 11 führen. Die Zweigleitungen 8, 9 enthalten jeweils ein elektromagnetisch betätigbares Einlaßventil 12, das in seiner Ruhestellung offen ist und durch Erregung des Betätigungsmagneten in eine Sperrstellung geschaltet werden kann. Parallel zu dem Einlaßventil 12 ist an die Zweigleitungen 8 bzw. 9 ein Rückschlagventil 13 angeschlossen, das in Richtung des Hauptbremszylinders 1 öffnet.

Die Radbremszylinder 10, 11 sind über die Zweigleitungen 8, 9 weiterhin an elektromagnetisch betätigbare Auslaßventile 14 angeschlossen, die in ihrer Ruhestellung gesperrt sind und durch Erregung ihres Betätigungsmagneten in eine Offenstellung geschaltet werden können, in der sie die Radbremszylinder 10, 11 mit einer Rücklaufleitung 15 verbinden. Die Rücklaufleitung 15 führt zum Einlaß einer hydrostatischen Pumpe 16, deren Auslaß über ein Druckventil 17 an den mit den Zweigleitungen 8, 9 verbundenen Abschnitt der Bremsleitung 5 angeschlossen ist. Die Rücklaufleitung 15 ist mit einem Niederdruckspeicher 18 verbunden, der überschüssiges Druckmittel beim Öffnen der Auslaßventile 14 bis zur Rückförderung durch die Pumpe 16 aufnimmt. Die Rücklaufleitung 15 ist weiterhin an eine Verbindungsleitung 19 angeschlossen, die bei dem Ausführungsbeispiel gemäß Figur 1 mit dem Behälter 4 und bei den übrigen Ausführungsbeispielen mit dem hauptzylinderseitigen Abschnitt der Bremsleitung 5 verbunden bzw. verbindbar ist.

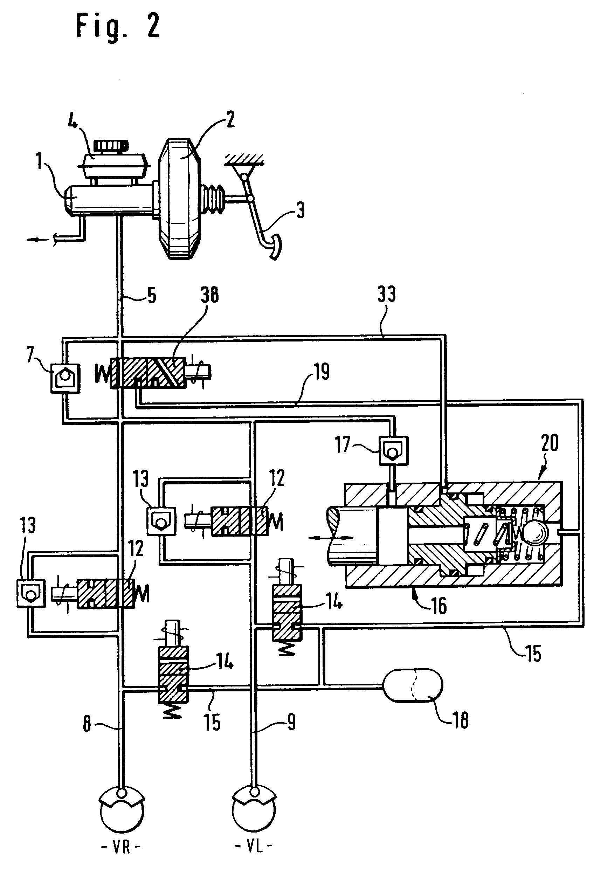

Bei den in den Figuren 1 und 2 dargestellten Ausführungsbeispielen ist das Saugventil der Pumpe 16 als Druckhalteventil 20 ausgebildet, dessen Öffnungsdruck entsprechend der jeweiligen Betriebsart änderbar ist. Die Zeichnung zeigt einen Teil eines Gehäuses 21 der Pumpe 19, das einen durch eine zylindrische Bohrung gebildeten Druckraum 22 enthält, der durch den axial bewegbaren Pumpenkolben 23 begrenzt wird. Der Druckraum 22 ist über eine Einlaßbohrung 24 an seiner Stirnseite an die Rücklaufleitung 15 und über eine seitliche Auslaßbohrung 25 an das Druckventil 17 angeschlossen. Die Einlaßbohrung 24 ist durch eine innerhalb des Druckraums vorgesehene Ventilkugel 26 verschlossen, die über zwei hintereinander angeordnete Druckfedern 27, 28 an einem Kolben 29 abgestützt ist. Der Kolben 29 ist als zylindrische Hülse ausgebildet, deren Enden mit gleichen Durchmessern gegenüber der den Druckraum 22 bildenden Bohrung abgedichtet sind. Zwischen den gedichteten Enden des Kolbens 29 befindet sich ein erweiterter, zylindrischer Ringraum 30, in dem ein in seinem Durchmesser größerer Mittelabschnitt 31 des Kolbens 29 axial verschiebbar und gegenüber der Zylinderwand des Ringraums 30 gedichtet ist. Der Mittelabschnitt 31 begrenzt auf diese Weise einen ringförmigen Steuerraum 32, der über eine Steuerleitung 33 zwischen dem Hauptbremszylinder 1 und der Ventileinrichtung 6 an die Bremsleitung 5 angeschlossen ist. Durch eine Steuerfeder 34 wird der Kolben 29 in der in der Zeichnung dargestellten Position gehalten, wenn der Hauptbremszylinder 1 nicht betätigt wird. zwischen den Druckfedern 27, 28 befindet sich ein Federteller, der an einer mit dem Kolben 29 verbundenen Anschlaghülse 35 abgestützt ist und dadurch die im Vergleich zur Druckfeder 27 stärkere Druckfeder 28 unter Vorspannung hält.

In der Verbindungsleitung 19 ist ein druckgesteuertes Ventil 36 angeordnet, dessen Steuerleitung 37 mit der Steuerleitung 33 verbunden ist. Das Ventil 36 ist in seiner Ruhestellung offen und kann durch eine Druckbeaufschlagung der Steuerleitung 37 in eine Sperrstellung geschaltet werden, in der die Verbindungsleitung 19 gesperrt ist.

Figur 1 zeigt den dargestellten Bremskreis der Bremsanlage in Ruhestellung, in der die den Radbremszylindern 10, 11 zugeordneten Bremsen VR, VL, die sich an der angetriebenen Vorderachse des Fahrzeugs befinden, nicht betätigt sind.

Zur Einleitung eines Bremsvorganges wird über das Bremspedal 3 und den Bremskraftverstärker 2 der Hauptbremszylinder 1 betätigt und in der Bremsleitung 5 sowie in den Zweigleitungen 8, 9 und den daran angeschlossenen Radbremszylindern 10 ein Druck erzeugt, durch den die Bremsen VR, VL angelegt werden. Bei dieser ersten Betriebsart des Bremskreises wird die Ventileinrichtung 6 nicht angesteuert und bleibt daher in der dargestellten Offenstellung. Der Druck in der Bremsleitung 5 gelangt über die Steuerleitung 33, 37 in den Steuerraum 32 und zu dem Ventil 36. Hierdurch wird das Ventil 36 in seine Sperrstellung geschaltet und der Kolben 29 wird gegen die Kraft der Steuerfeder 34 nach rechts verschoben, wodurch die Druckfeder 28 unmittelbar auf die Ventilkugel 26 einwirkt und dadurch den in der Einlaßbohrung erforderlichen Druck zum Öffnen des Druckhalteventils 20 auf ca. 1,3 bar erhöht. Wird nun während des Bremsvorgangs eine Regelung des Bremsschlupfes an den Bremsen VR, VL erforderlich, um ein Blockieren der Räder zu verhindern, so werden in bekannter Weise im Wechsel die Auslaßventile 14 und die Einlaßventile 12 von der Regeleinrichtung angesteuert und der Pumpenantrieb der Pumpe 16 eingeschaltet. Hierbei sind in der Druckreduzierstufe die Radbremszylinder 10, 11 durch die geschlossenen Einlaßventile 12 vom Hauptbremszylinder 1 getrennt und durch die geöffneten Auslaßventile 14 mit der Rücklaufleitung 15 verbunden. Das aus den Radbremszylindern 10, 11 in die Rücklaufleitung 15 entweichende Druckmittel wird zunächst von dem Niederdruckspeicher 18 aufgenommen und von der Pumpe 16 in die Bremsleitung 5 zurückgefördert. Hierbei wird durch den erhöhten Öffnungsdruck des Druckhalteventils 20 gewährleistet, daß der Druck an den Radbremszylindern 10, 11 nicht unter den Atmosphärendruck absinken kann, ein Eindringen von Luft und ein Zurücksaugen der Bremskolben wird damit wirksam vermieden.

In der zweiten Betriebsart erfolgt eine automatische Betätigung der Bremsen VR, VL durch die Regeleinrichtung, wenn der Hauptbremszylinder 1 nicht betätigt ist, um bei einem Anfahrvorgang den Antriebsschlupf an den Antriebsrädern zu regeln und ein Durchdrehen der Antriebsräder zu vermeiden.

Hierbei wird von der Regeleinrichtung die Ventileinrichtung 6 angesteuert, wodurch der Hauptbremszylinder 1 von den Zweigleitungen 8, 9 getrennt wird. Gleichzeitig wird der Antrieb der Pumpe 16 eingeschaltet. Da bei dieser Betriebsart die Steuerleitungen 33, 37 drucklos bleiben, bleibt das Ventil 36 in Offenstellung und der Kolben 29 in seiner durch die Steuerfeder 34 bewirkten, in der Zeichnung dargestellten Grundstellung. In dieser Stellung ist an der Ventilkugel 26 nur die schwache Druckfeder 27 wirksam, was einem Differenzdruck von ca. 0,2 bar zwischen der Einlaßbohrung 24 und dem Druckraum 22 entspricht. Dieser niedrige Differenzdruck ermöglicht ein selbsttätiges Ansaugen von Druckmittel durch die Pumpe 16 über die Verbindungsleitung 19 aus dem Behälter 4 und eine Förderung des Druckmittels über das Druckventil 17 und die Zweigleitungen 8, 9 zu den Radbremszylindern 10, 11, wodurch die Bremsen VR, VL betätigt werden. Das Ausmaß der Betätigung der Bremsen wird dabei wie bei einer Bremsschlupfregelung durch wechselweises Ansteuern der Einlaßventile 12 und der Auslaßventile 14 geregelt. Da bei dieser Betriebsart die Rücklaufleitung 15 über die Verbindungsleitung 19 ständig mit dem Behälter 4 in Verbindung steht, ist ein Absinken des Drucks in den Radbremszylindern während der Druckreduzierstufe unter den Atmosphärendruck nicht möglich. Es kann daher auch in dieser Betriebsphase nicht zu einem Eindringen von Luft oder Zurücksaugen der Bremskolben kommen.

Das Ausführungsbeispiel gemäß Figur 2 unterscheidet sich vom Ausführungsbeispiel gemäß Figur 1 im wesentlichen dadurch, daß die Ventileinrichtung 6 und das Ventil 36 durch eine elektromagnetisch betätigbare Ventileinrichtung 38 ersetzt sind, die anstelle der Ventileinrichtung 6 in der Bremsleitung 5 angeordnet ist. Die Ventileinrichtung 38 weist ein 2/3-Ventil auf, das in seiner Ruhestellung für die Bremsleitung 5 einen offenen Durchgang bildet und den Anschluß der Verbindungsleitung 19 sperrt und das in seiner durch Erregung des Betätigungsmagneten geschalteten Betätigungsstellung die Verbindungsleitung 19 mit dem zum Hauptbremszylinder 1 führenden Abschnitt der Bremsleitung 5 verbindet und den an die Zweigleitungen 8, 9 angeschlossenen Abschnitt der Bremsleitung 5 sperrt. In dieser die zweite Betriebsart ermöglichenden Betätigungsstellung der Ventileinrichtung 38 ist im Gegensatz zu dem Ausführungsbeispiel gemäß Figur 1 die Verbindungsleitung nicht unmittelbar, sondern über die Arbeitskammer des Hauptbremszylinders 1 an den Behälter 4 angeschlossen. Für die Wirkungsweise ist dies jedoch ohne Belang, da während der zweiten Betriebsart der Hauptbremszylinder 1 nicht betätigt ist, so daß die Arbeitskammer mit dem Behälter 4 in Verbindung steht.

Wird während der zweiten Betriebsart, also während einer Regelung des Antriebsschlupfes durch Betätigen des Hauptbremszylinders ein Bremsvorgang eingeleitet, so kann sich der über den Hauptbremszylinder 1 eingesteuerte Bremsdruck über das Rückschlagventil 7 in die Zweigleitungen 8, 9 fortpflanzen. Gleichzeitig wird das Betätigen des Hauptbremszylinders 1 durch Druck- oder Wegsensoren erfaßt und an die Regeleinrichtungen übermittelt, wodurch ein Umsteuern auf die erste Betriebsart und ein Zurückschalten der Ventileinrichtungen 6, 38 in die Ruhestellung bewirkt werden.

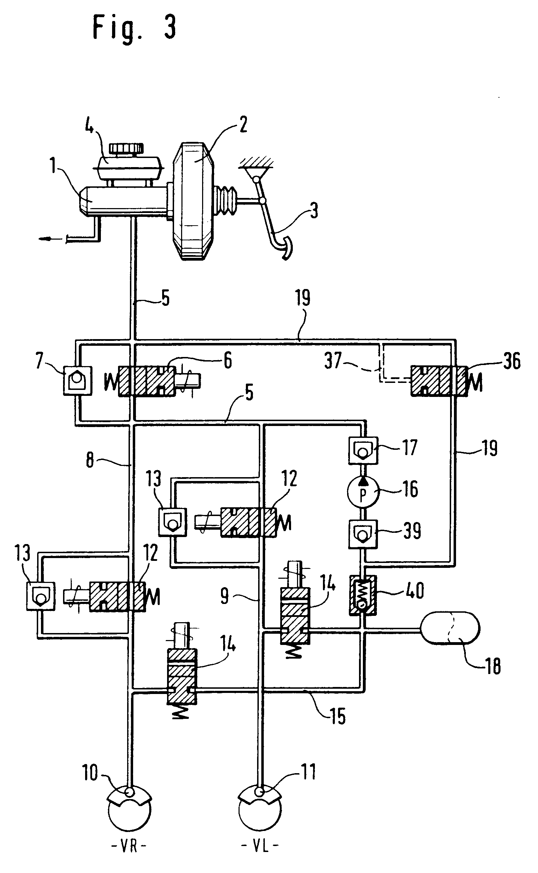

Bei dem Ausführungsbeispiel gemäß Figur 3 weist die Pumpe 16 ein Saugventil 39 auf, dessen Öffnungsdruck im Bereich von 0,2 bar liegt, so daß die Pumpe 16 selbsttätig Druckmittel ansaugen kann. Stromauf von dem Saugventil 39 ist ein Druckhalteventil 40 angeordnet, dessen Öffnungsdruck unveränderbar bei ca. 1,3 bar liegt. Die Verbindungsleitung 19, die wie beim Ausführungsbeispiel gemäß Figur 1 ein druckgesteuertes Ventil 36 enthält, ist mit einem Ende zwischen dem Saugventil 39 und dem Druckhalteventil 40 an die Rücklaufleitung 15 und mit ihrem anderen Ende an den mit dem Hauptbremszylinder 1 verbundenen Abschnitt der Bremsleitung 5 angeschlossen.

Bei der Bremsdruckregelvorrichtung gemäß Figur 3 wird in der ersten Betriebsart durch Betätigung des Hauptbremszylinders 1 in der Bremsleitung 5 ein Druck erzeugt, der das Ventil 36 in die Sperrstellung schaltet. Die Pumpe 16 kann daher nur über das Saugventil 39 und das Druckhalteventil 40 Druckmittel ansaugen, wobei der höhere Öffnungsdruck des Druckhalteventils 40 verhindert, daß der Druck an den Radbremszylindern 10, 11 unter den Atmosphärendruck absinkt. In der zweiten Betriebsart, in der der Hauptbremszylinder 1 nicht betätigt wird, bleibt das Ventil 36 in Offenstellung, während die Ventileinrichtung 6 in Schließstellung geschaltet wird. Nun kann die Pumpe 16 über das Saugventil 39, die Verbindungsleitung 19 und die Bremsleitung 5 von dem Hauptbremszylinder 1 Druckmittel ansaugen und zu einer automatischen Betätigung der Bremsen zu den Radbremszylindern 10, 11 fördern. Eine Druckreduzierung zur Minderung der Bremskraft erfolgt beim Öffnen der Auslaßventile 14 in beiden Betriebsarten über das Druckhalteventil 40, so daß während des Betriebs der Druck in den Radbremszylindern 10, 11 nicht vollständig bis auf Atmosphärendruck abgesenkt wird. Erst nach der Beendigung des jeweiligen Bremsvorgangs wird durch die Rückkehr der Ventileinrichtung 6 und der Einlaßventile 12 in ihre offene Ruhestellung ein vollständiger Druckabbau in den Radbremszylindern 10, 11 durch das Zurückströmen des Druckmittels zum Hauptbremszylinder 1 erzielt.

In den Figuren 1 bis 3 sind drei unterschiedliche Möglichkeiten gezeigt, um die Verbindungsleitung 19, die das Ansaugen von Druckmittel durch die Pumpe in der zweiten Betriebsphase ermöglicht, mit dem Hauptbremszylinder 1 bzw. dem Behälter 4 zu verbinden. Alle drei Varianten sind in ihrer Wirkung gleichwertig und können daher jeweils untereinander vertauscht werden.

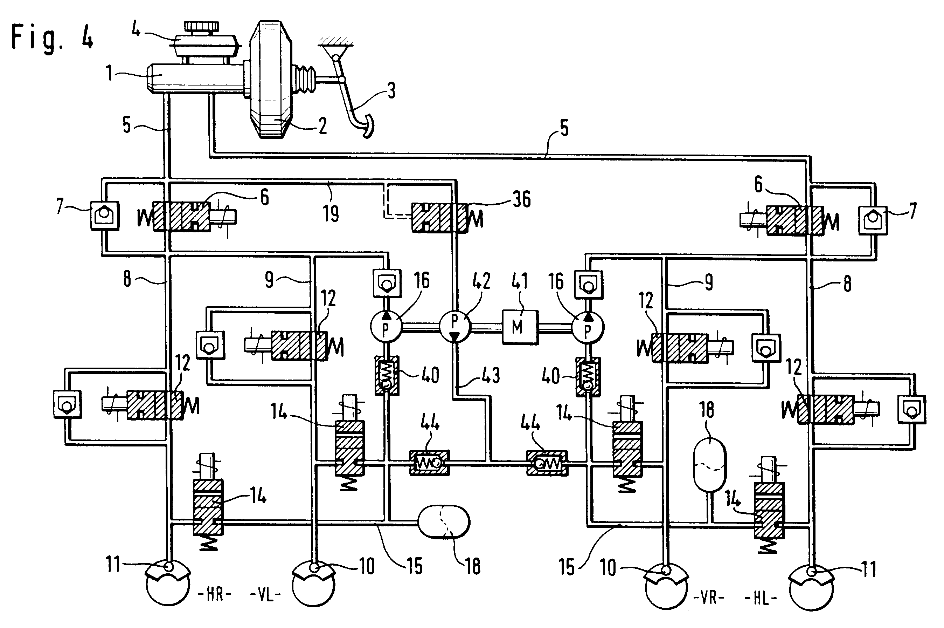

Bei dem in Figur 4 gezeigten Ausführungsbeispiel sind beide Bremskreise einer Fahrzeugbremsanlage dargestellt. Beide Bremskreise sind in ihrem Aufbau gleich und entsprechen den bisher beschriebenen Ausführungsbeispielen. An jeden Bremskreis ist ein Radbremszylinder 10 zur Betätigung einer Vorderradbremse und ein Radbremszylinder 11 zur Betätigung einer Hinterradbremse angeschlossen derart, daß die einem Bremskreis zugeordneten Bremsen sich jeweils an den diagonal zueinander liegenden Fahrzeugrädern befinden. Zur Bremsdruckregelung ist jeder Bremskreis an eine separate hydrostatische Pumpe 16 angeschlossen, deren Saugventil als Druckhalteventil 40 mit konstantem, höherem Öffnungsdruck ausgebildet ist. Beide Pumpen 16 werden von einem gemeinsamen Antrieb 41 angetrieben. Um in der zweiten Betriebsart zur Regelung des Antriebsschlupfes ein Ansaugen von Druckmittel durch die Pumpen 16 zu ermöglichen, ist weiterhin eine hydrodynamischen Ladepumpe 42 vorgesehen, die ebenfalls von dem Antrieb 41 angetrieben wird. Die Saugseite der Ladepumpe 42 ist über eine Verbindungsleitung 19, die ein druckabhängig schaltendes Ventil 36 enthält an den zum Hauptbremszylinder 1 führenden Zweig der Bremsleitung 5 eines Bremskreises angeschlossen. Von der Druckseite der Ladepumpe 42 führt eine Ladedruckleitung 43 jeweils über ein federbelastetes Rückschlagventil 44 zu den beiden Rücklaufleitungen 15 der beiden Bremskreise. Durch die Rückschlagventile 44 wird sichergestellt, daß die beiden Bremskreise hydraulisch voneinander getrennt bleiben.

Während eines durch Betätigen des Hauptbremszylinders 1 bewirkten Bremsvorgangs wird das Ventil 36 geschlossen, so daß bei einer Bremsschlupfregelung die gemeinsam mit den Pumpen 16 angetriebene Ladepumpe 42 über die Verbindungsleitung 19 kein Druckmittel ansaugen kann. Den Pumpen 16 wird daher nur Druckmittel zugeführt, solange der Druck in den Rücklaufleitungen 15 über dem Öffnungsdruck der Druckhalteventile 40 liegt.

Sollen die Bremsen VL, VR zur Regelung des Antriebsschlupfes automatisch betätigt werden, so kann nach dem Betätigen der Ventileinrichtungen 6 und dem Einschalten des Pumpenantriebs 41 die Ladepumpe 42 über das offene Ventil 36 und die Verbindungsleitung 19 Druckmittel vom Hauptbremszylinder 1 ansaugen und über die Ladedruckleitung 43 und die Rückschlagventile 44 in die Rücklaufleitungen 15 der Bremskreise fördern. Hierdurch steigt der Druck in den Rücklaufleitungen 15 soweit an, daß die Druckhalteventile 40 geöffnet werden und die Pumpen 16 in der erforderlichen Weise die Bremskreise mit Druckmittel speisen können. Die Ladepumpe 42 ist dabei so ausgelegt, daß ihre Fördermenge bei dem zum Öffnen der Druckhalteventile 40 erforderlichen Druck die gemeinsame Fördermenge der beiden Pumpen 16 übersteigt. Auf diese Weise ist gewährleistet, daß jede Pumpe 16 eine ausreichende Druckmittelmenge erhält.

Selbstverständlich ist auch eine Anordnung denkbar, bei der jede hydrostatische Pumpe 16 eine eigene Ladepumpe 42 aufweist, die das Druckmittel der ihr zugeordneten Bremsleitung entnimmt. Bei einer solchen Anordnung bleiben beide Bremskreise vollständig getrennt, so daß die Rückschlagventile 44 entfallen können. Wird für eine Regelung des Antriebsschlupfes nur ein Bremskreis benötigt, da die Bremsen der beiden angetriebenen Räder an den gleichen Bremskreis angeschlossen sind, so genügt es, wenn nur dieser Bremskreis mit einer Ladepumpe 42 versehen ist, da der andere Bremskreis nur in der ersten Betriebsart betrieben wird.

### Bezugszeichenliste:

- 1: Hauptbremszylinder
- 2: Unterdruckbremskraftverstärker
- 3: Bremspedal
- 4: Behälter
- 5: Bremsleitung
- 6: Ventileinrichtung
- 7: Rückschlagventil
- 8: Zweigleitung
- 9: Zweigleitung
- 10: Radbremszylinder
- 11: Radbremszylinder
- 12: Einlaßventil
- 13: Rückschlagventil
- 14: Auslaßventil
- 15: Rücklaufleitung
- 16: Pumpe
- 17: Druckventil
- 18: Niederdruckspeicher
- 19: Verbindungsleitung
- 20: Druckhalteventil
- 21: Gehäuse
- 22: Druckraum
- 23: Pumpenkolben
- 24: Einlaßbohrung
- 25: Auslaßbohrung
- 26: Ventilkugel
- 27: Druckfeder
- 28: Druckfeder
- 29: Kolben
- 30: Ringraum
- 31: Mittelabschnitt
- 32: Steuerraum
- 33: Steuerleitung
- 34: Steuerfeder
- 35: Anschlaghülse
- 36: Ventil
- 37: Steuerleitung
- 38: Ventileinrichtung
- 39: Saugventil
- 40: Druckhalteventil
- 41: Antrieb
- 42: Ladepumpe
- 43: Ladedruckleitung
- 44: Rückschlagventil

## Patentansprüche

1. Bremsdruckregelvorrichtung für eine hydraulische Kraftfahrzeugbremsanlage mit einem Hauptbremszylinder (1), mindestens einem mit dem Hauptbremszylinder über eine Bremsleitung (5) verbundenen Radbremszylinder (10, 11) zum Betätigen einer Bremse, einem Bremsdrucksteuerkreis (8, 9), der zwischen dem Hauptbremszylinder und dem Radbremszylinder in die Bremsleitung geschaltet ist und eine Pumpe (16) und Steuerventile (12, 14) enthält, die durch eine Regeleinrichtung steuerbar sind und den Radbremszylinder mit der Bremsleitung oder einer zum Einlaß (24) der Pumpe führenden Rücklaufleitung (15) verbinden, und mit einer zwischen dem Hauptbremszylinder und dem Bremsdrucksteuerkreis (8, 9) in die Bremsleitung geschalteten Ventileinrichtung (6), die in einer ersten Betriebsart den Auslaß (17) der Pumpe über die Bremsleitung mit dem Hauptbremszylinder verbindet und in einer zweiten Betriebsart die Verbindung vom Auslaß der Pumpe zum Hauptbremszylinder unterbricht und den Einlaß der Pumpe mit dem Hauptbremszylinder oder einem Behälter (4) verbindet, wobei der Einlaß (24) der Pumpe (16) ein in seiner Ruhestellung geschlossenes Druckhalteventil (20, 40) aufweist, das in der ersten Betriebsart zum Öffnen einen über dem Atmosphärendruck liegenden Überdruck in der Rücklaufleitung (15) erfordert und daß Mittel vorgesehen sind, die in der zweiten Betriebsart bei Atmosphärendruck in der Rücklaufleitung (15) die Sperrung des Einlasses (24) durch das Druckhalteventil (20, 40) aufheben, um ein selbsttätiges Ansaugen der Pumpe (16) zu ermöglichen, wobei der Öffnungsdruck des Druckhalteventils in der zweiten Betriebsart der Bremsdruckregelvorrichtung herabgesetzt ist, dadurch **gekennzeichnet,** daß die Ventilkugel (26) des Druckhalteventils (20, 40) über zwei hintereinander geschaltete Druckfedern (27, 28) an einem Kolben (29) abgestützt ist, wobei zwischen den Druckfedern (27, 28) ein Federteller vorgesehen ist, der an einer mit dem Kolben (29) verbundenen Anschlaghülse (35) abgestützt ist, so daß die im Vergleich zur Druckfeder (27) stärkere Druckfeder (28) unter Vorspannung steht.

2. Bremsdruckregelvorrichtung nach Anspruch 1,
dadurch gekennzeichnet, daß das Druckhalteventil (20) ein federbelastetes Verschlußelement (26) aufweist, das mit einer der zweiten Betriebsart entsprechenden, geringen Federkraft beaufschlagt ist und das mit Hilfe eines in der ersten Betriebsart mit einem Steuerdruck, insbesondere dem Druck des Hauptbremszylinders (1) beaufschlagbaren Kolbens (29) mit einer den Öffnungsdruck erhöhenden Federkraft beaufschlagbar ist.

3. Bremsdruckregelvorrichtung nach dem vorhergehenden Anspruch, dadurch gekennzeichnet, daß der Kolben (29) aus einer zylindrischen Hülse besteht, die im Druckraum (22) der Pumpe (16) zwischen dem Pumpenkolben (23) und dem Saugventil (26) angeordnet ist und deren Enden mit gleichem Durchmesser gegenüber dem Druckraum (22) abgedichtet sind, wobei der in seinem Durchmesser größere. Mittelabschnitt (31) des Kolbens (29) einen Ringraum (30) begrenzt, der mit dem Steuerdruck beaufschlagbar ist.

4. Bremsdruckregelvorrichtung nach Anspruch 1, dadurch gekennzeichnet, daß vor dem Druckhalteventil (40) eine hydrodynamische Ladepumpe (42) angeordnet ist, die durch Ansteuerung in der zweiten Betriebsart einen den Öffnungsdruck des Druckhalteventils (40) übersteigenden Druck in der Rücklaufleitung (15) erzeugt.

5. Bremsdruckregelvorrichtung nach einem der vorhergehenden Ansprüche, dadurch gekennzeichnet, daß das Druckhalteventil (20, 40) durch das Saugventil der Pumpe (16) gebildet wird.

6. Bremsdruckregelvorrichtung nach einem der Ansprüche 4 oder 5, dadurch gekennzeichnet, daß die hydrodynamische Ladepumpe (42) parallel zur Pumpe (16) an die Rücklaufleitung (15) angeschlossen und gemeinsam mit der Pumpe (16) antreibbar ist, wobei der Einlaß der hydrodynamischen Ladepumpe (42) mit dem Hauptbremszylinder (1) oder dem Behälter (4) verbunden und in der ersten Betriebsart durch ein druckabhängig schließendes Ventil (36) sperrbar ist.

7. Bremsdruckregelvorrichtung für eine Zweikreisbremsanlage mit zwei voneinander getrennten Bremskreisen, die jeweils eine Pumpe (16) und ein Druckhalteventil (40) aufweisen nach einem der Ansprüche 5 bis 7, dadurch gekennzeichnet, daß die Saugleitungen (15) beider Bremskreise gemeinsam an den Auslaß (43) der hydrodynamischen Ladepumpe (42) angeschlossen sind, wobei die Saugleitungen (15) durch federbelastete Rückschlagventile (44) voneinander getrennt sind.

8. Bremsdruckregelvorrichtung nach Anspruch 1, dadurch gekennzeichnet, daß das Druckhalteventil (40) stromauf vom Saugventil (39) der Pumpe (16) in der Saugleitung (15) angeordnet ist und daß zwischen dem Saugventil (39) und dem Druckhalteventil (40) von der Saugleitung (15) eine Verbindungsleitung (19) abzweigt, die zum Hauptbremszylinder (1) oder einem Behälter (4) führt und ein Sperrventil (36) enthält, das in der ersten Betriebsart offen und in der zweiten Betriebsart geschlossen ist.

9. Bremsdruckregelvorrichtung nach einem der Ansprüche 7 oder 8, dadurch gekennzeichnet, daß das Ventii (36) durch den Druck des Hauptbremszylinders (1) in seine Sperrstellung geschaltet wird.

## Claims

1. A brake pressure controller for a hydraulic automotive vehicle brake system including a master brake cylinder (1), at least one wheel brake cylinder (10, 11) in communication with the master brake cylinder through a brake conduit (5) for actuating a brake, a brake pressure control circuit (8, 9), arranged in the brake conduit between the master brake cylinder and the wheel brake cylinder, having a pump (16) and control valves (12,14) which are controllable by a controller and provide a connection between the wheel brake cylinder and the brake conduit or a return conduit (15) leading to the inlet (24) of the pump, and including a valve means (6) provided in the brake conduit between the master brake cylinder and the brake pressure control circuit (8,9), the valve means connecting, in a first mode of operation, the outlet (17) of the pump, through the brake conduit, to the master brake cylinder and, in a second mode of operation, discontinuing the connection between the outlet of the pump and the master brake cylinder and connecting the inlet of the pump to the master brake cylinder or a reservoir (4), and the inlet (24) of the pump (16) comprises a pressure holding valve (20,40) closed in its resting position and, in the first mode of operation, requiring for opening an excess pressure in the return conduit (15) that is above atmospheric pressure, and means are provided unblocking, in the second mode of operation, at atmospheric pressure in the return conduit (15) the blocking of the inlet (24) through the pressure holding valve (20,40) to permit an automatic fluid intake of the pump (16), and the opening pressure of the pressure holding valve is reduced in the second mode of operation of the brake pressure controller,
characterized in that the valve ball (26) of the pressure holding valve (20,40) is supported on a piston (29) by way of two serially connected compression springs (27,28), and a spring retainer is provided between the compression springs (27,28) and is supported on a stop sleeve (35) connected to the piston (29) so that the compression spring (28) is under bias which is stronger in comparison to compression spring (27).

2. A brake pressure controller as claimed in claim 1,
characterized in that the pressure holding valve (20) includes a spring-loaded closure element (26), to which a low spring force corresponding to the second mode of operation is applied and to which a spring force increasing the opening pressure can be applied by way of a piston (29), to which a control pressure, in particular the pressure of the master brake cylinder (1) can be applied in the first mode of operation.

3. A brake pressure controller as claimed in the preceding claim,
characterized in that the piston (29) takes the form of a cylindrical sleeve arranged in the pressure chamber (22) of the pump (16) between the pump piston (23) and the suction valve (26), the ends of which sleeve have identical diameters and are sealed against the pressure chamber (22), with the larger-diameter central section (31) of piston (29) confining an annular chamber (30), to which control pressure can be applied.

4. A brake pressure controller as claimed in claim 1,
characterized in that a hydrodynamic charging pump (42) is provided ahead of the pressure holding valve (40) which generates a pressure in the return conduit (15) exceeding the opening pressure of the pressure holding valve (40) when actuated in the second mode of operation.

5. A brake pressure controller as claimed in any one of the preceding claims,
characterized in that the pressure holding valve (20,40) is formed as the suction valve of the pump (16).

6. A brake pressure controller according to any one of claims 4 or 5,
characterized in that the hydrodynamic charging pump (42), in parallel to the pump (16), is connected to the return conduit (15) and is jointly drivable with the pump (16), and the inlet of the hydrodynamic charging pump (42) is in communication with the master brake cylinder (1) or the reservoir (4) and, in the first mode of operation, can be blocked by a valve (36) closing in response to pressure.

7. A brake pressure controller for a dual-circuit brake system including two separate brake circuits each including a pump (16) and a pressure holding valve (40), as claimed in any one of claims 5 to 7,
characterized in that the intake conduits (15) of the two brake circuits jointly are in communication with the outlet (43) of the hydrodynamic charging pump (42), with the intake conduits (15) being separated from one another by spring-loaded check valves (44).

8. A brake pressure controller as claimed in claim 1,
characterized in that the pressure holding valve (40) is connected upstream of the suction valve (39) of the pump (16) in the intake conduit (15), and in that between the suction valve (39) and the pressure holding valve (40), a connecting conduit (19) branches from the intake conduit (15) and leads to the master brake cylinder (1) or a reservoir (4), the conduit (19) including a blocking valve (36) which in the first mode of operation is open and in the second mode of operation is closed.

9. A brake pressure controller as claimed in any one of claims 7 or 8,
characterized in that the valve (36) is switched into its blocking position by the pressure of the master brake cylinder (1).

## Revendications

1. Dispositif de régulation de la pression de freinage pour un système hydraulique de freinage de véhicule automobile comportant un maître-cylindre de frein (1), au moins un cylindre de frein de roue (10,11) relié au maître-cylindre de frein par l'intermédiaire d'une canalisation de frein (5) et servant à actionner un frein, un circuit (8,9) de commande de la pression de freinage, qui est monté dans la canalisation de freinage entre le maître-cylindre de frein et le cylindre de frein de roue, et contient une pompe (16) et des soupapes de commande (12,14), qui peuvent être commandées par un dispositif de régulation et relient le cylindre de frein de roue à la canalisation de freinage ou à une canalisation de retour (15) qui conduit à l'entrée (24) de la pompe, et comportant un dispositif à soupape (6) monté dans la canalisation de freinage entre le maître-cylindre de frein et le circuit (8,9) de commande de la pression de freinage et qui, dans un premier type de fonctionnement, relie la sortie (17) de la pompe par l'intermédiaire de la canalisation de freinage au maître-cylindre de frein et, dans un second type de fonctionnement, interrompt la liaison de la sortie de la pompe au maître-cylindre de frein et relie l'entrée de la pompe au maître-cylindre de frein ou à un récipient (14), et dans lequel l'entrée (24) de la pompe (16) comporte une soupape de maintien de pression (20,40), qui est fermée dans sa position de repos et qui dans le premier type de fonctionnement requiert, pour son ouverture, la présence d'une surpression supérieure à la pression atmosphérique, dans la canalisation de retour (15), et que des moyens sont prévus, qui, dans le second type de fonctionnement, lorsque la pression atmosphérique règne dans la canalisation de retour (15), interrompent le blocage de l'entrée (24) par la soupape de maintien de pression (20,40), de manière à permettre une aspiration automatique de la pompe (16), la pression d'ouverture de la soupape de maintien de pression étant réduite dans le second type de fonctionnement du dispositif de régulation de la pression de freinage, caractérisé en ce que la bille de soupape (26) de la soupape de maintien de pression (20,40) prend appui, par l'intermédiaire de deux ressorts de pression (27,28) disposés l'un derrière l'autre, sur un piston (29), tandis qu'entre les ressorts de pression (27,28) est prévue une coupelle de ressort, qui prend appui sur une douille de butée (35), qui est reliée au piston (29) de sorte que le ressort de pression (28), qui est plus fort que le ressort de pression (27), est placé sous précontrainte.

2. Dispositif de régulation de la pression de freinage selon la revendication 1, caractérisé en ce que la soupape de maintien de pression (20) comporte un élément de fermeture (26), qui est chargé par un ressort et est soumis à une faible force élastique, qui correspond au second type de fonctionnement, et qui peut être chargé par une force élastique qui augmente la pression d'ouverture, à l'aide d'un piston (29) qui, dans le premier type de fonctionnement, peut être chargé par une pression de commande, notamment la pression du maître-cylindre de frein (1).

3. Dispositif de régulation de la pression de freinage selon la revendication précédente, caractérisé en ce que le piston (29) est constitué par une douille cylindrique, qui est disposée dans la chambre de pression (22) de la pompe (16), entre le piston (23) de la pompe et la soupape d'aspiration (26) et dont les extrémités de même diamètre sont fermées de façon étanche par rapport à la chambre de pression (22), la section médiane (31) de diamètre supérieur du piston (29) limitant une chambre annulaire (30), qui peut être chargée par la pression de commande.

4. Dispositif de régulation de la pression de freinage selon la revendication 1, caractérisé en ce qu'en amont de la soupape de maintien de pression (40) est disposée une pompe de charge hydrodynamique (42), qui, au moyen d'une commande dans le second type de fonctionnement, produit dans la canalisation de retour (15) une pression supérieure à la pression d'ouverture de la soupape de maintien de pression (40).

5. Dispositif de régulation de la pression de freinage selon l'une des revendications précédentes, caractérisé en ce que la soupape de maintien de pression (20,40) est formée par la soupape d'aspiration de la pompe (16).

6. Dispositif de régulation de la pression de freinage selon l'une des revendications 4 ou 5, caractérisé en ce que la pompe de charge hydrodynamique (42) est raccordée, en parallèle avec la pompe (16), à la canalisation de retour (15) et peut être entraînée conjointement avec la pompe (16), l'entrée de la pompe de charge hydrodynamique (42) étant reliée au maître-cylindre de frein (1) et au récipient (4) et pouvant être bloquée, dans le premier type de fonctionnement, par une soupape (36) qui se ferme en fonction de la pression.

7. Dispositif de régulation de la pression de freinage pour un système de freinage à deux circuits, comprenant deux circuits séparés l'un de l'autre, qui possèdent chacun une pompe (16) et une soupape de maintien de pression (40), selon l'une des revendications 5 à 7, caractérisé en ce que les canalisations d'aspiration (15) des deux circuits de freinage sont raccordées en commun à la sortie (43) de la pompe de charge hydrodynamique (42), les canalisations d'aspiration (15) étant séparées l'une de l'autre par des soupapes de non-retour (44) chargées par des ressorts.

8. Dispositif de régulation de la pression de freinage selon la revendication 1, caractérisé en ce que la soupape de maintien de pression (40) est disposée en amont de la soupape d'aspiration (39) de la pompe (16) dans la canalisation d'aspiration (15) et qu'entre la soupape d'aspiration (39) et la soupape de maintien de pression (40) s'étend en dérivation, à partir de la canalisation d'aspiration (15), une canalisation de liaison (19), qui se raccorde au maître-cylindre de frein (1) ou à un récipient (4) et contient une soupape de blocage (36), qui est ouverte dans le premier type de fonctionnement et est fermée dans le second type de fonctionnement.

9. Dispositif de régulation de la pression de freinage selon l'une des revendications 7 ou 8, caractérisé en ce que la soupape (36) est commutée dans sa position de blocage par la pression du maître-cylindre de frein (1).
